# EUROPEAN PATENT APPLICATION

(11) **EP 1 462 474 A1**
(43) Date of publication of application: **29.09.2004**
(21) Application number: 02791957.0
(22) Date of filing: 03.12.2002
(51) Int. Cl.: C08J 11/08

(54) **SOLVENT FOR TREATING POLYSTYRENE RESIN AND METHOD OF TREATING POLYSTYRENE RESIN WITH THE SAME**

(30) Priority: 04.12.2001 JP 2001370442
(71) Applicant: Hamano, Shigenobu, Izumiotsu-shi, Osaka 595-0071 (JP)
(72) Inventor: Hamano, Shigenobu, Izumiotsu-shi, Osaka 595-0071 (JP)
(74) Representative: Müller-Boré & Partner Patentanwälte
(86) International application number: PCT/JP2002/012617
(87) International publication number: WO 2003/048243

(57) **Abstract**

A solvent for polystyrene resin treatment which is for use in contracting a polystyrene resin by contact therewith and is excellent in treatment rate, stickiness and sedimentation of the substance being treated, etc.; and a method of treating a polystyrene resin with the solvent.

The solvent for polystyrene resin treatment, which is a liquid medium for bringing a polystyrene into a jelly- or gel- state and thereby reducing the volume, comprises an aliphatic hydrocarbon and a solvent in which polystyrene resins are soluble,-and is characterized in that the mixing proportion of the aliphatic hydrocarbon is 37.5 ± 2.5 wt% based on the liquid medium.

## Description

### TECHNICAL FIELD

The present invention relates to a solvent for polystyrene resin treatment that is made to contact a polystyrene resin to reduce the volume of the polystyrene resin, and a method of treating a polystyrene resin using the solvent.

### BACKGROUND ART

Polystyrene foam is bulky due to being expanded and lightweight, and moreover polystyrene foam has a strong structure and hence gas thereinside cannot be contracted and discharged even upon applying a considerable external pressure; there is thus a problem that the efficiency of transporting recovered waste polystyrene foam is poor, and thus the transportation cost and the treatment cost are very high.

Regarding methods of reducing the volume of waste polystyrene foam, solvents for polystyrene foam treatment and polystyrene foam treatment methods using such solvents have thus been proposed according to which waste polystyrene foam is made to come into contact with a liquid medium in which polystyrene foam is soluble, thus dissolving and hence reducing the volume of the waste polystyrene foam (Japanese Patent Application Laid-open No. 2-1748, Japanese Patent Application Laid-open No. 5-59212, Japanese Patent Application Laid-open No. 7-113089, etc.).

In these methods, an organic solvent in which polystyrene foam is soluble, for example an organic solvent such as an aromatic compound or a lower aliphatic ketone such as acetone or methyl ethyl ketone, is used alone, thus dissolving and hence reducing the volume of the waste polystyrene foam.

However, with these methods in which an organic solvent in which polystyrene foam is soluble is used alone, and the polystyrene foam contacts this organic solvent and is thus dissolved into a liquid, the cost of separating the polystyrene foam from the solution after the treatment is high, or the solubility of the polystyrene foam per unit of the organic solvent used is low, and hence it has not been possible to put these methods into practical use.

Recently, solvents for polystyrene foam treatment and polystyrene foam treatment methods using such solvents have been mainly researched and developed, wherein a liquid medium comprising a mixture of a solvent in which polystyrene foam is soluble such as an aromatic hydrocarbon and a solvent in which polystyrene foam is not soluble such as an aliphatic hydrocarbon is used, thus making the polystyrene foam into a resin in a semi-solid swollen state, i.e. the form of a jelly or a paste, and hence reducing the volume of the polystyrene foam (Japanese Patent Application Laid-open No. 9-40802, Japanese Patent Application Laid-open No. 9-157435, etc.).

Through such a constitution, waste polystyrene foam can be treated in a short time period and with less energy, and moreover collection and recycle of the polystyrene resin after the treatment is easy, not much space is required, and a solvent that is relatively cheap can be used.

That is, with these solvents for polystyrene foam treatment, by mixing together a solvent in which polystyrene foam is soluble and a solvent in which polystyrene foam is not soluble such as an aliphatic hydrocarbon, polystyrene foam is made to have sustained stable solubility in the solvent for polystyrene foam treatment, and hence compared with a conventional solvent for treating polystyrene foam, a markedly larger amount of polystyrene foam can be treated per unit amount of the solvent.

However, although commercialization of a considerable number of solvents for polystyrene foam treatment having a constitution as above has been attempted to some extent, at present there are virtually no such commercialized solvents available on the general market.

The reason for this is that all of the commercialized solvents have had shortcomings leading to practical problems.

These shortcomings can be roughly summarized as the following (1) to (5).
(1) The flash point is low and hence safety cannot be guaranteed.
(2) The treatment rate is slow, and hence a large amount of polystyrene foam cannot be treated in a short time period.
(3) The amount of polystyrene foam treated per unit amount of the solvent is low, and hence running costs are high.
(4) During the treatment, the treated jelly-like or gel-like polystyrene resin floats in the treatment vessel, and hence charging new polystyrene foam from above is difficult.
(5) The treated jelly-like polystyrene resin is markedly sticky, and hence the efficiency of work such as transferring this polystyrene resin into another vessel is markedly poor.

All solvents that have been commercialized up to now have had at least one of the above problems (1) to (5), and hence their usage has been restricted in practice, and thus none of the solvents has conquered the market.

Of the above problems, a particularly fatal problem is (5) ; in the case of treating polystyrene foam using a solvent for polystyrene foam treatment as described above, the treated jelly-like or gel-like polystyrene resin is markedly sticky, and thus sticks firmly to the walls and bottom of the treatment vessel, or the floor and so on of the workplace, and hence great effort is required to remove this polystyrene resin, and thus the work efficiency is markedly poor.

Specifically, to reuse the treatment vessel, the jelly-like or gel-like polystyrene resin have to be removed from the treatment vessel. Polystyrene resin stuck to the walls and bottom of the treatment vessel and so on must be completely scraped off from the treatment vessel by hand using a spatula or the like, and hence the work efficiency is poor, and thus the labor cost and effort required are great, and hence there is no economic merit in treating the polystyrene foam.

Moreover, if some of the polystyrene resin is adhered to the floor of the workplace or the like, then it is difficult to completely remove this polystyrene resin, and hence the floor will continue to be sticky for a long time period, and leaving this as is is operationally undesirable.

Furthermore, there is a problem that in work such as transferring and casting treated jelly-like or gel-like polystyrene resin from one vessel into another during transport to a dumping site, reprocessing plant or the like, the handleability, the work efficiency and so on are markedly poor.

In this way, at present there are the above problems (1) to (5) with the polystyrene foam treatment method in which polystyrene foam is treated into a jelly or gel state to reduce the volume of the polystyrene foam, and in particular the stickiness of the treated polystyrene resin ((5) above) is a very big problem; there are thus strong demands for the development of, for example, a method according to which the stickiness is reduced, and hence the polystyrene resin handleability and the work efficiency are improved, and polystyrene resin that has become stuck to the inside of the treatment vessel, the floor of the workplace or the like can be easily removed.

Consequently, if no suitable improvement is made with regard to these problems, then putting solvents for polystyrene foam treatment having the above constitution and polystyrene foam treatment methods using such solvents into practical use will be a very difficult undertaking.

### DISCLOSURE OF THE INVENTION

In view of the above technical background, the present inventor carried out assiduous studies into solvents for polystyrene foam treatment according to which the above problems (1) to (5) are resolved, and in particular the stickiness of the treated polystyrene resin is reduced, and hence the work efficiency and handleability are improved, and the polystyrene resin can be easily recovered, treated and so on with less energy, whereby the present inventor eventually accomplished the present invention.

That is, the present invention was attained to suitably resolve the above problems (1) to (5), and in particular has an obj ect thereof to provide a method of treating a polystyrene resin according to which the stickiness of the treated jelly-like or gel-like polystyrene resin is reduced, and hence the work efficiency and handleability are improved, and the jelly-like or gel-like polystyrene resin can be easily recovered, treated and so on with less energy.

The present inventor carried out assiduous studies in view of the problems of the prior art described above, and as a result discovered that a solvent for polystyrene resin treatment that is a liquid medium for putting a polystyrene resin into a jelly or gel state to reduce the volume of the polystyrene resin, wherein the liquid medium comprises aliphatic hydrocarbon(s) and polystyrene resin-dissolving solvent(s), and wherein the mixing proportion of the aliphatic hydrocarbon(s) in the liquid medium is 37.5 ± 2.5 wt%, gives an excellent polystyrene resin treatment rate and gives a treated polystyrene resin having little stickiness, thus accomplishing the present invention.

Specifically, the present invention relates to a solvent for polystyrene resin treatment and a method of treating a polystyrene resin as follows.
1. A solvent for polystyrene resin treatment that is a liquid medium for putting a polystyrene resin into a jelly or gel state to reduce the volume of the polystyrene resin, the liquid medium comprising an aliphatic hydrocarbon and a polystyrene resin-dissolving solvent, wherein the mixing proportion of the aliphatic hydrocarbon in the liquid medium is 37.5 ± 2.5 wt%.
2. The solvent for polystyrene resin treatment according to item 1, wherein the polystyrene resin-dissolving solvent is at least one selected from compounds having in the molecular structure thereof at least one functional group selected from benzene rings, ester groups, ketone groups and ether groups.
3. The solvent for polystyrene resin treatment according to item 1, wherein the polystyrene resin-dissolving solvent comprises at least one terpenic compound.
4. The solvent for polystyrene resin treatment according to item 1, wherein the polystyrene resin-dissolving solvent comprises at least one selected from the group consisting of xylene, limonene, 2-octanone, ethylene glycol diethyl ether, alkylbenzenes having 9 carbon atoms and alkylbenzenes having 10 carbon atoms.
5. The solvent for polystyrene resin treatment according to item 1, 2 or 4, wherein the polystyrene resin-dissolving solvent comprises at least one selected from the group consisting of xylene, alkylbenzenes having 9 carbon atoms and alkylbenzenes having 10 carbon atoms.
6. The solvent for polystyrene resin treatment according to any of items 1 through 5, wherein the aliphatic hydrocarbon contains at least 90 wt% of n-tridecane.
7. The solvent for polystyrene resin treatment according to any of items 1 through 6, wherein the mixing proportion of the aliphatic hydrocarbon in the liquid medium is 37.5 ± 2.0 wt%.
8. The solvent for polystyrene resin treatment according to any of items 1 through 7, wherein the mixing proportion of the aliphatic hydrocarbon in the liquid medium is 37.5 ± 1.5 wt%.
9 . A method of treating a polystyrene resin, comprising putting polystyrene foam into a dissolved or gel state to reduce the volume of the polystyrene foam using the solvent for polystyrene resin treatment according to any of items 1 through 8.

The solvent for polystyrene resin treatment according to the present invention is a liquid medium for putting a polystyrene resin into a jelly or gel state to reduce the volume of the polystyrene resin, the liquid medium comprising aliphatic hydrocarbon(s) and polystyrene resin-dissolving solvent(s), wherein the mixing proportion of the aliphatic hydrocarbon(s) in the liquid medium is 37.5 ± 2.5 wt%.

Here, an account of the reasons that it has not been possible to resolve the above problems (1) to (5) up to how is as follows.

To resolve problem (1), the flash point can be raised by increasing the mixing proportion of the aliphatic hydrocarbon(s) in the solvent for polystyrene resin treatment, but in inverse proportion to this the treatment rate becomes slower, and hence problem (2) becomes greater.

On the other hand, if the mixing proportion of the aliphatic hydrocarbon(s) in the solvent for polystyrene resin treatment is reduced to increase the treatment rate while ignoring problem (1), i.e. while sacrificing safety, then this time the treatment amount per unit amount of the solvent will drop, and hence problem (3) will become greater.

Moreover, to resolve problem (4) that the treated jelly-like or gel-like polystyrene resin floats in the treatment vessel, the first means to be proposed is to increase the mixing proportion of the aliphatic hydrocarbon(s) in the solvent for polystyrene resin treatment, thus making the specific gravity of the solvent for polystyrene resin treatment lower than the specific gravity of the jelly-like or gel-like polystyrene resin.

However, if the mixing proportion of the aliphatic hydrocarbon(s) in the solvent for polystyrene resin treatment is increased, then as described above the treatment rate will drop, and hence polystyrene foam charged in will be put into a jelly or gel state while still containing bubbles, and as a result the apparent specific gravity of the treated polystyrene resin will drop, and hence the treated jelly-like or gel-like polystyrene resin will still float in the treatment vessel, making it very difficult to resolve problem (4).

Conversely, if the mixing proportion of the aliphatic hydrocarbon(s) in the solvent for polystyrene resin treatment is reduced to increase the treatment rate, then this time the specific gravity of the solvent for polystyrene resin treatment will increase, and hence again the treated polystyrene resin will float in the treatment vessel, making it very difficult to resolve problem (4).

Furthermore, regarding the problem (5) that the treated jelly-like or gel-like polystyrene resin is markedly sticky, and hence the work efficiency is markedly poor, increasing the mixing proportion of the aliphatic hydrocarbon(s) in the solvent for polystyrene resin treatment may be increased so that the surface of the treated polystyrene resin will be coated with the aliphatic hydrocarbon(s), resulting in the impaired treatment and more pronounced problem (2). Accordingly, the treated polystyrene resin hardens, thereby lowering fluidity. Consequently, the problem of it being difficult to transfer the treated polystyrene resin from one vessel into another during transport to a dumping site, reprocessing plant or the like will again arise.

The above problems (1) to (5) are thus intertwined in an irregular and complex fashion, with one or more of the problems arising depending on the mixing proportion of the aliphatic hydrocarbon(s) in the solvent for polystyrene resin treatment; until now, no research and development has been carried out to set the mixing proportion while considering all above problems (1) to (5), and in actual practice there have only been solvents for polystyrene resin treatment for which only improving the treatment rate has been considered, and solvents for polystyrene resin treatment for which only increasing the flash point has been considered.

These solvents for polystyrene resin treatment have thus had shortcomings such as the treatment rate being high but the flash point being low and the treatment amount being low, or the flash point being high and hence safety being good but the treatment rate being slow, and furthermore these solvents for polystyrene resin treatment have also had various other shortcomings such as the treated polystyrene resin floating in the treatment vessel, or the handleability of the treated jelly-like or gel-like polystyrene resin being poor, and hence these solvents for polystyrene resin treatment have not gained acceptance on the general market.

To resolve the above problems (1) to (5), the present inventor thus carried out the following experiments to verify the changes in the properties of a solvent for polystyrene resin treatment that occur upon changing the mixing proportion of the aliphatic hydrocarbon(s) in the solvent for polystyrene resin treatment.

First, the present inventor prepared liquid media comprising a mixture of an aliphatic hydrocarbon and a polystyrene resin-dissolving solvent as experimental solvents for polystyrene resin treatment, changing the mixing proportion of the aliphatic hydrocarbon in 5 wt% intervals, and investigated the change in the flash point upon the change in the mixing proportion of the aliphatic hydrocarbon at a temperature of 25°C.

The results were that in the case that the mixing proportion of the aliphatic hydrocarbon was changed from 0 up to 30 wt%, the flash point of the liquid medium comprising a mixture of the aliphatic hydrocarbon and the polystyrene resin-dissolving solvent was dominated by the flash point of the polystyrene resin-dissolving solvent which has a low flash point, and hence over this range of the mixing proportion of the aliphatic hydrocarbon the flash point of the liquid medium hardly changed but rather remained low.

However, it was found that when the mixing proportion of the aliphatic hydrocarbon exceeded 30 wt%, the flash point of the liquid medium increased gradually, and when the mixing proportion of the aliphatic hydrocarbon exceeded 35 wt%, the flash point rose rapidly.

Next, the present inventor carried out similar experiments to the above, thus investigating the change in the treatment rate upon a change in the mixing proportion of the aliphatic hydrocarbon.

In these experiments, a polystyrene foam cube (10g) was taken as a test piece, and this test piece was put into 100 g of the liquid medium, and then the time taken for the test piece to be completely treated in the liquid medium was measured, whereby the treatment rate per unit amount of polystyrene foam (g/s) was calculated; a comparison was carried out of this treatment rate.

The results were that in the case that the mixing proportion of the aliphatic hydrocarbon was changed from 0 up to 30 wt%, there was hardly any change in the treatment rate.

However, it was found that when the mixing proportion of the aliphatic hydrocarbon exceeded 35 wt%, the treatment rate gradually became slower, and when the mixing proportion of the aliphatic hydrocarbon exceeded 40 wt%, the treatment rate became yet slower.

Next, the present inventor carried out similar experiments to the above, thus investigating the change in the treatment amount upon a change in the mixing proportion of the aliphatic hydrocarbon.

In these experiments, polystyrene foam was put into 100 g of the liquid medium and the amount of the polystyrene foam that could be treated per unit amount of the liquid medium was measured; a comparison was carried out of this treatment amount.

The results were that in the case that the mixing proportion of the aliphatic hydrocarbon was changed from 0 up to 30 wt%, there was hardly any changes in the treatment amount.

However, it was found that when the mixing proportion of the aliphatic hydrocarbon exceeded 30 wt% the treatment amount gradually increased, and when the mixing proportion of the aliphatic hydrocarbon exceeded 35 wt% the treatment amount increased rapidly, and then when the mixing proportion of the aliphatic hydrocarbon reached 40 wt% the treatment amount virtually reached a limit.

The above three sets of experiments were carried out using aliphatic hydrocarbons having various numbers of carbon atoms and various polystyrene resin-dissolving solvents (aromatic hydrocarbons, esters, ketones and ethers) and changing the combinations thereof as appropriate, and the results were judged in an overall fashion.

As a result, it was found that for the solvents for polystyrene resin treatment, regardless of the types of the aliphatic hydrocarbon and the polystyrene resin-dissolving solvent, mixing proportions of the aliphatic hydrocarbon at which the conflicting properties flash point, treatment rate and treatment amount are all satisfactory exist between 35 and 40 wt%.

Moreover, further experiments were carried out, and as a result of carrying out investigations in which the mixing proportion of the aliphatic hydrocarbon was changed in 0.5 wt% intervals between 35 and 40 wt%, it was found that mixing proportions of the aliphatic hydrocarbon at which the conflicting properties flash point, treatment rate and treatment amount are all satisfactory exist in a very narrow range centered on 37.5 wt%.

The reason for this is not clear and is currently being investigated, but it is assumed that it may be because the balance between the specific gravity of the liquid medium and the treatment rate is very good; it has also been found that when polystyrene resin is put into a liquid medium for which the mixing proportion of the aliphatic hydrocarbon has been set to be within a very narrow range centered on 37.5 wt%, then when the polystyrene resin is treated, the treated polystyrene resin rapidly sediments at the bottom of the treatment vessel, and hence is no impediment when putting in new polystyrene resin.

Moreover, surprisingly, it was found that from a mixing proportion of the aliphatic hydrocarbon of 35 wt%, the stickiness of the treated polystyrene resin becomes very low, and moreover the treated polystyrene resin has a suitable degree of fluidity, and can be cleanly removed from the treatment vessel without sticking to the walls or bottom of the treatment vessel, and moreover that if the proportion of the aliphatic hydrocarbon exceeds 40 wt%, then the treated jelly-like or gel-like polystyrene resin becomes hard, and thus the fluidity thereof is lost, and hence a new problem of it becoming difficult to transfer the treated polystyrene resin from one vessel into another during transport to a dumping site, reprocessing plant or the like again arises.

That is, it was found that in the case that polystyrene resin is put into a liquid medium for which the mixing proportion of the aliphatic hydrocarbon has been set to be within a very narrow range centered on 37.5 wt%, the treated polystyrene resin has very low stickiness, and moreover has a suitable degree of fluidity, does not stick to the walls or bottom of the treatment vessel, and can be cleanly removed from the treatment vessel.

The reason for this is again not clear at present and is currently being investigated, but it is assumed that it may be because the balance of the fluidity (hardness) of the treated polystyrene resin for the aliphatic hydrocarbon in the liquid medium is very good.

Based on these experimental results, the solvent for polystyrene resin treatment of the present invention is a liquid medium for putting a polystyrene resin into a jelly or gel state to reduce the volume of the polystyrene resin, the liquid medium comprising an aliphatic hydrocarbon and a polystyrene resin-dissolving solvent, wherein the mixing proportion of the aliphatic hydrocarbon in the liquid medium is 37.5 ± 2.5 wt%; if the mixing proportion of the aliphatic hydrocarbon in the liquid medium is outside this range, then at least one of the above problems (1) to (5) will occur.

That is, with the present invention, through the above constitution, the conflicting properties flash point, treatment rate and treatment amount are all satisfactorily improved, and the handleability and usability at a recycling site, and also the work efficiency can be markedly improved, and as a result all of the above problems (1) to (5) can be resolved.

Following is a more detailed description of the present invention.

There are no particular limitations on the polystyrene resin treated in the present invention, but polystyrene foam is preferable. Polystyrene resins are used in a very wide range of fields, and it is not possible to mention all of these, but for example polystyrene resins are used in trays (containers) for food and so on, thermal insulating materials, stationery, containers for recording media (cassette tapes, CDs, MDs, MOs, DVDs, etc.), resin parts of various electric appliances, and so on, and these are included in targets for treatment here.

In the present invention, 'treat a polystyrene resin into a jelly or gel state' means making the polystyrene resin contact the liquid medium (solvent), thus removing bubbles contained inside the polystyrene resin, and coagulating the polystyrene resin into a jelly state (paste state) or gel state (a semi-solid state), thus reducing the volume of the polystyrene resin.

The liquid medium for treating the polystyrene resin into a jelly or gel state is a solvent for polystyrene resin treatment having as a principal component thereof a liquid medium comprising a mixture of solvent that is able to dissolve polystyrene resins alone (polystyrene resin-dissolving solvent) and an aliphatic hydrocarbon.

The content of the polystyrene resin-dissolving solvent in the solvent for polystyrene resin treatment of the present invention is 60 to 65 wt%, preferably 60.5 to 64.5 wt%, more preferably 61 to 64 wt%.

There are no particular limitations on the polystyrene resin-dissolving solvent, so long as it is a solvent that is able to dissolve polystyrene resins alone, but in general compound having at least one functional group selected from benzene rings, ester groups, ketone groups, ether groups and so on in themolecular structure thereof is suitable; a specific example is at least one selected from aromatic compounds such as alkylbenzenes such as xylene and ethylbenzene, ester compounds such as ethyl acetate, ethyl butyrate and ethyl laurate, ketones such as methyl isobutyl ketone and octanone, ether compounds such as diethyl ether and diisobutyl ether, and so on.

Moreover, as the compound having at least one functional group selected from benzene rings, ester groups, ketone groups, ether groups and so on in the molecular structure thereof, in addition to the above, at least one selected from diester compounds such as dimethyl adipate and diethyl adipate, compounds represented by the general formula R1-(O-R2)ₙ-O-R3 such as ethylene glycol diethyl ether, diethylene glycol dimethyl ether and triethylene glycol dimethyl ether, glycol ether fatty acid alkyl ester compounds represented by the general formula R4- (O-R5)ₙ-O-CO-R6 such as glycol monomethyl ether acetate, and so on can also be suitably used in the solvent for polystyrene resin treatment, and furthermore these can also be used mixed with at least one selected from the previously mentioned polystyrene resin-dissolving solvents. Here, R1, R3, R4 and R6 may be the same or different, and each is preferably an alkyl group having 1 to 6 carbon atoms, more preferably an alkyl group having 1 to 3 carbon atoms, yet more preferably an alkyl group having 1 or 2 carbon atoms. Moreover, R2 and R5 may be the same or different, and each is preferably an alkyl group having 2 to 5 carbon atoms, more preferably an alkyl group having 2 or 3 carbon atoms, yet more preferably an alkyl group having 2 carbon atoms. Moreover, n represents an integer from 1 to 5, preferably 1 to 3, more preferably 1 or 2.

In addition, despite being compounds not having a benzene ring, an ester group, a ketone group or an ether group in the molecular structure thereof, at least one selected from terpenic compounds such as limonene, pinene and terpinene can also be suitably used in the solvent for polystyrene resin treatment. These terpenic compounds can also be used mixed with at least one selected from the previously mentioned polystyrene resin-dissolving solvents.

A preferable solvent for polystyrene resin treatment is at least one solvent selected from the group consisting of alkylbenzenes having 7 to 16 carbon atoms, limonene, 2-octanone and ethylene glycol diethyl ether. A more preferable solvent for polystyrene resin treatment is at least one alkylbenzene selected from alkylbenzenes having 7 to 12 carbon atoms, a yet more preferable solvent for polystyrene resin treatment is at least one alkylbenzene selected from alkylbenzenes having 8 to 10 carbon atoms, and the most preferable solvent for polystyrene resin treatment is at least one alkylbenzene selected from the group consisting of xylene, alkylbenzenes having 9 carbon atoms and alkylbenzenes having 10 carbon atoms.

Moreover, the content of the aliphatic hydrocarbon in the solvent for polystyrene resin treatment of the present invention is 35 to 40 wt%, preferably 35.5 to 39.5 wt%, more preferably 36 to 39 wt%.

Examples of the aliphatic hydrocarbon are known aliphatic hydrocarbons, with specific examples being straight chain and branched aliphatic hydrocarbons having 6 to 18 carbon atoms such as hexanes, heptanes, octanes, nonanes, decanes, undecanes, dodecanes, tridecanes, tetradecanes, pentadecanes, hexadecanes, heptadecanes and octadecanes, unsaturated aliphatic hydrocarbons, and isomers thereof. Each of the aliphatic hydrocarbon(s) is preferably an octane, nonanes, decanes, undecanes, dodecanes, tridecanes or tetradecanes, more preferably nonanes, decanes, undecanes, dodecanes or tridecanes, yet more preferably tridecanes.

One of the above solvents may be used, or two or more may be selected and used mixed together, and moreover a mixed liquid medium can be suitably used so long as it is a liquid at least under conditions of 1 atmosphere and 0°C.

Examples of suitable commercially sold ones of such aliphatic hydrocarbons are n-paraffin SL (a mixture of C₁₀ paraffin, C₁₁ paraffin and C₁₂ paraffin), n-paraffin L (a mixture of C₁₀ paraffin, C₁₁ paraffin, C₁₂ paraffin and C₁₃ paraffin) and n-paraffin M (a mixture of C₁₂ paraffin, C₁₃ paraffin and C₁₄ paraffin) made by Nippon Petrochemicals Co., Ltd., Isosol 300 and Isosol 400 which are isoparaffins made by Nippon Petrochemicals Co., Ltd., and so on. Moreover, examples of suitable commercially sold n-tridecanes are n-paraffin N-13 made by Japan Energy Corporation and so on.

Moreover, examples of suitable commercially sold unsaturated aliphatic hydrocarbons are DODECENE, 56N Polymer and HIMAS Polymer, which are olefins made by Nippon Petrochemicals Co., Ltd., and so on.

The solvent for polystyrene resin treatment of the present invention is a liquid medium comprising an aliphatic hydrocarbon as above and a polystyrene resin-dissolving solvent as above, and has as the biggest characteristic feature thereof the feature that the mixing proportion of the aliphatic hydrocarbon in the liquid medium is set to within a very narrow range centered on 37.5 wt%.

In general, the mixing proportion of the aliphatic hydrocarbon in the liquid medium is preferably within a range of 2.5 wt% above or below 37.5 wt%, i. e. 37.5 ± 2.5 wt%, more preferably 37.5 ± 2.0 wt%, yet more preferably 37.5 ± 1.5 wt%.

Note that other additives, e.g. organic or inorganic compounds such as dyes and fragrances, may be added to the solvent for polystyrene resin treatment of the present invention.

In a method of treating a polystyrene resin in which a polystyrene resin is put into a jelly or gel state to reduce the volume of the polystyrene resin using a solvent for polystyrene resin treatment of the present invention, to attain the above object, a solvent for polystyrene resin treatment as described above is made to contact the polystyrene resin, thus treating the polystyrene resin. There are no particular limitations on the method of making the solvent for polystyrene resin treatment contact the polystyrene resin, but examples are methods commonly used in the field of treating polystyrene resins with solvents such as immersing and spraying.

There are no particular limitations on the treatment conditions when treating a polystyrene resin using the solvent for polystyrene resin treatment of the present invention so long as the volume of the polystyrene resin is reduced, and these conditions can be selected as appropriate in accordance with the amount and form of the polystyrene resin to be treated, the proportions of the constituent components of the solvent for polystyrene resin treatment of the present invention, and so on. For example, the treatment can be carried out by charging polystyrene foam into the solvent for polystyrene resin treatment of the present invention at -30 to 60°C, preferably -15 to 40°C, and making the solvent for polystyrene resin treatment contact the polystyrene foam through a method such as applying pressure to polystyrene foam that comes out above the surface of the solvent so as to immerse the polystyrene foam. The treatment time is approximately 20 to 80 seconds at normal temperature when using the solvent at an excess on a piece of polystyrene foam of size 5 cm x 5 cm × 5 cm (2.5 g). In the case of a lower temperature, the treatment time will be longer.

### BEST MODE FOR CARRYING OUT THE INVENTION

Examples will now be given so as to describe the present invention in more detail; however, the present invention is not limited to these examples.

### Example 1

As a solvent for polystyrene resin treatment, a liquid medium comprising 62.5 wt% of xylene and 37.5 wt% of n-paraffin L made by Nippon Petrochemicals Co., Ltd. was stirred to uniformity, thus obtaining a solvent for polystyrene resin treatment of the present invention.

### Example 2

As a solvent for polystyrene resin treatment, a liquid medium comprising 62.5 wt% of limonene and 37.5 wt% of n-paraffin SL made by Nippon Petrochemicals Co., Ltd. was stirred to uniformity, thus obtaining a solvent for polystyrene resin treatment of the present invention.

### Example 3

As a solvent for polystyrene resin treatment, a liquid medium comprising 62.5 wt% of 2-octanone and 37.5 wt% of n-paraffin M made by Nippon Petrochemicals Co., Ltd. was stirred to uniformity, thus obtaining a solvent for polystyrene resin treatment of the present invention.

### Example 4

As a solvent for polystyrene resin treatment, a liquid medium comprising 62.5 wt% of ethylene glycol diethyl ether and 37.5 wt% of n-paraffin L made by Nippon Petrochemicals Co., Ltd. was stirred to uniformity, thus obtaining a solvent for polystyrene resin treatment of the present invention.

### Example 5

As a solvent for polystyrene resin treatment, a liquid medium comprising 62.5 wt% of Swasol 1500 made by Maruzen Petrochemical Co., Ltd., which has C₁₀ alkylbenzenes as a principal component thereof (at least 80 wt%), and 37.5 wt% of n-paraffin N-13 made by Japan Energy Corporation as n-tridecane was stirred to uniformity, thus obtaining a solvent for polystyrene resin treatment of the present invention.

### Comparative Example 1a

A liquid medium obtained by stirring to uniformity a mixture of 55 wt% of xylene and 45 wt% of n-paraffin L made by Nippon Petrochemicals Co., Ltd. was used.

### Comparative Example 1b

A liquid medium obtained by stirring to uniformity a mixture of 70 wt% of xylene and 30 wt% of n-paraffin L made by Nippon Petrochemicals Co., Ltd. was used.

### Comparative Example 2a

A liquid medium obtained by stirring to uniformity a mixture of 55 wt% of limonene and 45 wt% of n-paraffin SL made by Nippon Petrochemicals Co., Ltd. was used.

### Comparative Example 2b

A liquid medium obtained by stirring to uniformity a mixture of 70 wt% of limonene and 30 wt% of n-paraffin SL made by Nippon Petrochemicals Co., Ltd. was used.

### Comparative Example 3a

A liquid medium obtained by stirring to uniformity a mixture of 55 wt% of 2-octanone and 45 wt% of n-paraffin M made by Nippon Petrochemicals Co., Ltd. was used.

### Comparative Example 3b

A liquid medium obtained by stirring to uniformity a mixture of 70 wt% of 2-octanone and 30 wt% of n-paraffin M made by Nippon Petrochemicals Co., Ltd. was used.

### Comparative Example 4a

A liquid medium obtained by stirring to uniformity a mixture of 55 wt% of ethylene glycol diethyl ether and 45 wt% of n-paraffin L made by Nippon Petrochemicals Co., Ltd. was used.

### Comparative Example 4b

A liquid medium obtained by stirring to uniformity a mixture of 70 wt% of ethylene glycol diethyl ether and 30 wt% of n-paraffin L made by Nippon Petrochemicals Co., Ltd. was used.

### Test Example 1

100 g of each of the solvents for polystyrene resin treatment of Examples 1 to 5 and the liquid media of Comparative Examples 1 to 4 was put into a vessel. Four 5 cm × 5 cm × 5 cm cubes of polystyrene foam (2.5 g) having a foaming magnification of 60× were prepared, and were charged in order into each of the vessels into which one of the solvents for polystyrene resin treatment or liquid media had been put, and comparative tests were carried out into the treatment rate, the amount of polystyrene foam treated, the sedimentation condition of the polystyrene resin after the treatment, and the stickiness (sticking resistance) of the polystyrene resin after the treatment.

The stickiness tests in the comparative tests were carried out by turning the vessel (two types were used, namely glass and stainless steel) upside down for each sample after the charging in of the polystyrene foam had been completed, and observing the state of sticking of the treated polystyrene resin to the vessel.

The results are shown in Table 1.

**Table 1**

| | Treatment rate | Amount of polystyrene foam treated | Sedimentation condition | Sticking resistance |
|---|---|---|---|---|
| Example 1 | A | A | A | A |
| Comparative Example 1a | B | A | C | B |
| Comparative Example 1b | A | B | B | C |
| Example 2 | B | B | B | A |
| Comparative Example 2a | C | B | D | B |
| Comparative Example 2b | B | C | C | D |
| Example 3 | B | B | A | A |
| Comparative Example 3a | C | B | D | B |
| Comparative Example 3b | B | C | C | D |
| Example 4 | A | A | A | A |
| Comparative Example 4a | B | A | C | B |
| Comparative Example 4b | A | B | B | C |
| Example 5 | A | A | A | A |
| A: Very Good B: Good C: Poor D: Very poor | | | | |

The results were that it was found that the solvents for polystyrene resin treatment of the Examples are superior in terms of all of treatment rate, treatment amount, sedimentation and sticking resistance compared with the Comparative Examples for which the mixing proportion of the aliphatic hydrocarbon was changed by plus or minus only 5 wt% up or down from the range of the present invention (35 to 40 wt%).

In particular, with the solvents for polystyrene resin treatment of the Examples, it was observed that with either a glass vessel (beaker) or a stainless steel vessel, as soon as turning the vessel upside down, the treated polystyrene resin immediately falls and separates completely from the vessel, and hence it was found that the stickiness of the treated polystyrene foam is reduced by a solvent for polystyrene resin treatment having the mixing proportion of the aliphatic hydrocarbon is set according to the present invention.

### Test Example 2: Volume reduction time and sedimentation condition

200 g of the solvent for polystyrene resin treatment obtained in Example 5 was put into a glass vessel, a 2.5 g (5 cm × 5 cm × 5 cm) piece of polystyrene foam having a foaming magnification of 60× was charged therein, and the time required for volume reduction and the external appearance of the treated material were observed. Note that the air temperature was 30.5°C and the liquid temperature was 30.2°C.

The result was that the volume reduction was completed in 1 minute 32 seconds, and the treated material became gel-like and sedimented in the solvent.

### Test Example 3: Volume reduction time and external appearance

200 g of the solvent for polystyrene resin treatment obtained in Example 5 was put into a glass vessel, 42 of a polystyrene foam cube 5cm on a side as used in Test Example 2 were charged therein, and the time required for volume reduction and the external appearance of the treated material were observed. Note that the air temperature was 30.5°C and the liquid temperature was 30.2°C.

The result was that the volume reduction was completed in 7 minutes 55 seconds, and the treated material became gel-like and sedimented in the solvent.

### Test Example 4: External appearance and sticking resistance

200 g of the solvent for polystyrene resin treatment obtained in Example 5 was put into a glass vessel, 42 of a polystyrene foam cube 5cm on a side as used in Test Example 2 were charged therein, and the external appearance of the treated material and the stickiness to the vessel were observed. Note that the air temperature was 30.5°C and the liquid temperature was 30.2°C.

The result was that the treated material became gel-like and it was able to be easily removed from the vessel very easily.

### Test Example 5: Treatment amount

200 g of the solvent for polystyrene resin treatment obtained in Example 5 was put into a glass vessel, one 100 of a polystyrene foam cube 5cm on a side as used in Test Example 2 were charged therein, the floating polystyrene foam pieces on the surface of the solvent was pressed downward, and the volume of polystyrene foam reduced by the solvent was measured.

The result was that 1 g of polystyrene foam could be subjected to volume reduction per 1 cc (0.8 g) of the solvent.

### INDUSTRIAL APPLICABILITY

The present invention relates to a liquid medium for putting a polystyrene resin into a jelly or gel state to reduce the volume of the polystyrene resin, the liquid medium comprising an aliphatic hydrocarbon and a polystyrene resin-dissolving solvent. Moreover, the mixing proportion of the aliphatic hydrocarbon in the liquid medium is strictly controlled to be in a very narrow range of 37.5 ± 2.5 wt%, whereby effects such as the following are produced: basic properties such as the flash point, the treatment rate and the treatment amount, and safety and so on are improved, and in particular stickiness of the treated polystyrene resin is eliminated, and hence the work efficiency and the handleability can be markedly improved.

More specifically, the present invention enables the following problems (1) to (5) of conventional solvents for polystyrene resin treatment to be resolved.
(1) The flash point is low and hence safety cannot be guaranteed.
(2) The treatment rate is slow, and hence a large amount of polystyrene foam cannot be treated in a short time period.
(3) The amount of polystyrene foam treated per unit amount of the solvent is low, and hence running costs are high.
(4) During the treatment, treated polystyrene resin floats in the treatment vessel, and hence charging in new polystyrene foam from above is difficult.
(5) The treated polystyrene resin is markedly sticky, and hence the work efficiency is markedly poor.

That is, the present invention has been accomplished to resolve the above problems (1) to (5), and relates to a solvent for polystyrene resin treatment and a method of treating a polystyrene resin using the solvent according to which in particular the stickiness of the treated polystyrene resin is reduced, and hence the work efficiency and handleability are improved, and thus polystyrene resin can be easily collected, treated and so on with less energy; the usefulness of the present invention is thus very great.

## Claims

1. A solvent for polystyrene resin treatment that is a liquid medium for putting a polystyrene resin into a jelly or gel state to reduce the volume of the polystyrene resin, the liquid medium comprising an aliphatic hydrocarbon and a polystyrene resin-dissolving solvent, wherein the mixing proportion of the aliphatic hydrocarbon in the liquid medium is 37.5 ± 2.5 wt%.

2. The solvent for polystyrene resin treatment according to claim 1, wherein the polystyrene resin-dissolving solvent is at least one selected from compounds having in the molecular structure thereof at least one functional group selected frombenzene rings, ester groups, ketone groups and ether groups.

3. The solvent for polystyrene resin treatment according to claim 1, wherein the polystyrene resin-dissolving solvent comprises at least one terpenic compound.

4. The solvent for polystyrene resin treatment according to claim 1, wherein the polystyrene resin-dissolving solvent comprises at least one selected from the group consisting of alkylbenzenes having 7 to 16 carbon atoms, limonene, 2-octanone and ethylene glycol diethyl ether.

5. The solvent for polystyrene resin treatment according to claim 1, 2 or 4, wherein the polystyrene resin-dissolving solvent comprises at least one alkylbenzene selected from alkylbenzenes having 7 to 12 carbon atoms.

6. The solvent for polystyrene resin treatment according to claim 1, 2, 4 or 5, wherein the polystyrene resin-dissolving solvent comprises at least one alkylbenzene selected from alkylbenzenes having 8 to 10 carbon atoms.

7. The solvent for polystyrene resin treatment according to claim 1, 2, 4, 5 or 6, wherein the polystyrene resin-dissolving solvent contains at least one alkylbenzene selected from the group consisting of xylene, alkylbenzenes having 9 carbon atoms and alkylbenzenes having 10 carbon atoms.

8. The solvent for polystyrene resin treatment according to any of claims 1 through 7, wherein the aliphatic hydrocarbon comprises at least 90 wt% of n-tridecane.

9. The solvent for polystyrene resin treatment according to any of claims 1 through 7, wherein the mixing proportion of the aliphatic hydrocarbon in the liquid medium is 37.5 ± 2.0 wt%.

10. The solvent for polystyrene resin treatment according to any of claims 1 through 9, wherein the mixing proportion of the aliphatic hydrocarbon in the liquid medium is 37.5 ± 1.5 wt%.

11. A method of treating a polystyrene resin, comprising putting polystyrene foam into a dissolved or gel state to reduce the volume of the polystyrene foam using the solvent for polystyrene resin treatment according to any of claims 1 through 10.
